# EUROPEAN PATENT APPLICATION

(11) **EP 4 783 319 A1**
(43) Date of publication of application: **29.07.2026**
(21) Application number: 25154503.4
(22) Date of filing: 28.01.2025
(51) Int. Cl.: H01M 50/202, H01M 50/213

(54) **BATTERY HOLDER FOR HOLDING AND ELECTRICALLY CONTACTING A BATTERY**

(71) Applicant: Koninklijke Philips N.V., 5656 AE Eindhoven (NL)
(72) Inventor: MONSBOURGH, Philip Peter, 5656 AG Eindhoven (NL); ACEVEDO VELAZQUEZ, Michelle, 5656 AG Eindhoven (NL); MOLEMA, Jeroen, 5656 AG Eindhoven (NL)
(74) Representative: Philips Intellectual Property & Standards

(57) **Abstract**

The present invention relates to a battery holder (10) configured for holding and electrically contacting a battery (32). The battery holder (10) comprises a battery chamber (12) configured to receive the battery (32) and having a longitudinal axis; a first electric contact (14) arranged at a first end portion of the battery chamber (12) and configured to electrically contact a first electric terminal (34) of the battery (32), wherein the first electric contact (14) is configured as a scrape contact to electrically contact a circumferential contact surface of a metal pin (36) of a first electric terminal (34) of the battery (32) at two mutually opposite positions on said circumferential contact surface; and a second electric contact (16) arranged at a second end portion of the battery chamber (12) opposite the first end portion and configured to electrically contact a second electric terminal (38) of the battery (32), wherein the second electric contact (16) is configured as a spring contact to electrically contact a metal contact surface of the second electric terminal (38) of the battery (32) by spring force of the spring contact acting in an axial direction parallel to the longitudinal axis of the battery chamber.

## Description

### FIELD OF THE INVENTION

The present invention relates to a battery holder configured for holding and electrically contacting a battery. The present invention further relates to a battery system comprising a battery holder and a battery.

### BACKGROUND OF THE INVENTION

In the foreseeable future, new EU legislation (Battery Directive and Right-to-Repair (R2R) Directive) is expected to require a battery solution wherein a user is enabled to replace the battery in small household appliances, in particular grooming or beauty appliances. Such battery solutions will be referred to as "user-replaceable battery solutions" or "user replacement of batteries" in the following. Although the current EU Battery Directive legislation allows for replacement by the user of the device containing the battery as well as the PCBA (Printed Circuit Board Assembly) containing the battery, it is expected that future updates to this legislation will require replacement by the user of the battery only. User replacement of a battery in a small household appliance may pose a number of risks to the user. These include ordering or placing an incorrect battery type, using a generic alkaline battery, purchasing a low-quality third-party battery, and placing a battery with its polarities in the incorrect position. As a battery is an electro-chemical device, incorrect battery replacement can result in a significant safety risk.

US 2007/0275299 A1 discloses one or more dual-contact assemblies and a battery receptacle including such assemblies. A dual-contact assembly includes a positive contact, a negative contact, and an insulating connector disposed between and connecting each of the positive contact and the negative contact in an electrically insulating disposition relative to each other. A dual-contact assembly hereof can be resilient such that at least one of the positive contact, the negative contact and the insulating connector of the resilient dual-contact assembly are resiliently movable, the insulating connector maintaining the positive and negative contacts of the resilient dual-contact assembly in an electrically insulated disposition relative to each other. In a battery receptacle, at least two dual-contact assemblies are connected to a substrate in a battery receiving disposition. The dual contact assembly and battery receptacle allow batteries to be installed in any configuration, while still delivering electrical current of the proper polarity to the product at substantially all times.

Further improvements are required to prevent incorrect battery replacement in the field of user-replaceable battery solutions.

### SUMMARY OF THE INVENTION

It is an object of the present invention to provide a user-replaceable battery solution configured to prevent the user from placing incorrect types of batteries, such as generic third-party batteries (e.g. alkaline batteries), wrong Li-Ion or other battery chemistries (e.g. having wrong charge characteristics or safety features), into a battery holder, and to prevent the user from placing the correct battery with its polarities in the incorrect position into a battery holder.

In a first aspect of the present invention a battery holder configured for holding and electrically contacting a battery is presented, wherein the battery comprises a battery housing having a longitudinal axis, a first electric terminal provided at a first axial end surface of the battery housing and comprising a metal pin protruding from the first axial end surface and having a circumferential contact surface extending parallel to the longitudinal axis of the battery housing, and a second electric terminal provided at a second axial end surface of the battery housing and comprising a metal contact surface extending transversely to the longitudinal axis of the battery housing, wherein the battery holder comprises: a battery chamber configured to receive the battery and having a longitudinal axis; a first electric contact arranged at a first end portion of the battery chamber and configured to electrically contact the first electric terminal of the battery, wherein the first electric contact is configured as a scrape contact to electrically contact the circumferential contact surface of the metal pin of the first electric terminal of the battery at two mutually opposite positions on said circumferential contact surface; and a second electric contact arranged at a second end portion of the battery chamber opposite the first end portion and configured to electrically contact the second electric terminal of the battery, wherein the second electric contact is configured as a spring contact to electrically contact the metal contact surface of the second electric terminal of the battery by spring force of the spring contact acting in an axial direction parallel to the longitudinal axis of the battery chamber.

In a second aspect of the present invention a battery system is presented comprising: a battery holder according to the first aspect of the present disclosure or any embodiment thereof; and a battery comprising a battery housing having a longitudinal axis, a first electric terminal provided at a first axial end surface of the battery housing and comprising a metal pin protruding from the first axial end surface and having a circumferential contact surface extending parallel to the longitudinal axis of the battery housing, and a second electric terminal provided at a second axial end surface of the battery housing and comprising a metal contact surface extending transversely to the longitudinal axis of the battery housing. The battery may be of one battery type of a set of batteries.

Preferred embodiments of the invention are defined in the dependent claims. It shall be understood that the claimed battery system has similar and/or identical preferred embodiments as the claimed battery holder, in particular as defined in the dependent claims and as disclosed herein.

It has been found that there are different safety risks when inserting batteries into battery-powered appliances, depending on the different characteristics and/or chemistries of the batteries and the characteristics of the electrical circuitry of the appliances. Critical safety risks may result from incompatible battery chemistries in combination with electrical circuitry and may cause appliance failure or damage, or battery damage that may result in thermal runaway leading to a fire or hazard due to emission of chemicals used in batteries. Performance risks may occur due to the insertion of other incorrect batteries, e.g. of insufficient capacity, and may result in reduced performance of the primary function of appliances.

The present invention is based on the idea to discriminate between different battery types using a physical key to prevent the insertion of incorrect battery types into the battery holder and/or to prevent the connection of incorrect battery types with electric contacts of the battery holder while allowing the insertion and connection of correct battery types. The physical key can function as a form closure to check at least one geometric feature of the metal pin of the first electric terminal of the battery. In addition, the physical key can function as an electrical verification to check the ability of the metal pin to connect an electrical circuit of the circuitry of the battery holder, respectively the appliance comprising the battery holder. In particular, batteries that could pose a critical safety risk in the appliance are to be prevented from being correctly inserted into the battery chamber of the battery holder by means of the physical key. In particular, for batteries that may only cause a performance risk, it may be sufficient that the batteries are not reliably electrically connected or are connected with inverted polarity if being inserted in the battery chamber.

According to the present invention, the physical key can be provided as a barrier that is configured to physically block the entry of an incorrect battery type into the battery chamber and/or to prevent the access to at least one of the electric contacts of the battery holder by means of form closure. Alternatively, or in addition, the physical key may be provided as an electric contact of the battery holder having a certain shape to allow only the metal pin of the correct battery type to connect, while the metal pin of the incorrect battery type is not able to reliably electric connect to the electric contact, even in case the metal pin is able to reach the electric contact. E.g. the electric contact may have a larger diameter than the metal pin, so that there is a gap between the electric contact and the metal pin. In addition to the physical key as defined by the battery holder, which is configured to physically prevent the insertion of an incorrect battery type into the battery holder, an additional electrical key may be provided as an aspect of the electrical circuitry, which is configured to ensure that a battery having a wrong, i.e., inverted polarity cannot be connected to the electrical circuit, e.g. by means of electronic components such as diodes.

The battery holder may be part of or be connected to a PCBA (Printed Circuit Board Assembly) and may be integrated into a household appliance. Alternatively, the battery holder may be insertable in a household appliance. Further, the battery holder may comprise a housing or a cover, respectively a lid.

Generally, a battery can be understood as a battery of one of different battery types, in particular regarding different battery chemistries (e.g., NiMH / Li-Ion / LiFePo) and/or capacity and/or different battery sizes. In particular, a battery can be understood as a primary battery as well as a secondary battery.

In this context, electrically contacting means connecting the electric contacts of the battery holder to the electric terminals of the battery in such a way that an electrical connection is provided between each pair of connectors (electric contact and electric terminal) and connecting the battery with the correct polarity, so that the battery holder is configured to power the electrical circuitry by means of the battery. In particular, the battery may be connected with the correct polarity if the positive electric terminal (positive pole of the battery) is connected to the positive electric contact of the battery holder and the negative electric terminal (negative pole of the battery) is connected to the negative electric contact of the battery holder. It should be noted that hereinafter the positive and negative electric contact of the battery holder as well as the positive and negative electric terminal of the battery may also be referred to as positive and negative contact and as positive and negative terminal, respectively.

The battery chamber may be an elongated cavity arranged in the battery holder for receiving the battery in a receiving direction and holding the battery in an inserted state, if the battery is inserted into the battery chamber. The receiving direction points into the battery chamber from the outside through an opening of the battery chamber. In particular, the receiving direction extends orthogonally to a longitudinal axis of the battery chamber extending between the first and the second electric contacts of the battery holder. The battery chamber may have a length and a width corresponding to a length and a width of the housing of a correct battery type. In particular, the battery chamber may have a shape corresponding to a shape of the housing of the correct battery type, in particular a cylindrical shape.

The scrape contact may be a plate-shaped metal element, in particular formed from sheet metal. The scrape contact can be arranged in the battery chamber and extends substantially in a direction opposite to the receiving direction of the battery, in particular transversely or orthogonally to a longitudinal axis extending between the first and the second end portions of the battery chamber. The scrape contact may comprise two metal contact plates each having two main surfaces extending transversely to the longitudinal axis of the battery chamber and a contact side surface connecting the two main surfaces, wherein the contact side surface of each of the two metal contact plates is arranged to electrically contact the circumferential contact surface of the metal pin of the first electric terminal of the battery at a respective one of the two mutually opposite positions on said circumferential contact surface. The scrape contact may comprise a receiving slot, respectively a slot-shaped receptacle, configured to receive and electrically contact the metal pin of the first electric terminal of the battery, wherein the slot-shaped receptacle diverges towards an open end of the slot-shaped receptacle in a direction contrary to the receiving direction. The slot-shaped receptacle may be lined up with an open receiving slot of an isolating element of the battery holder (which is detailed below) such that the metal pin of the battery can be received by the slot-shaped receptacle of the scrape contact and the open receiving slot of the isolating element at the same time. The scrape contact may further be configured to provide a clamping force on the metal pin of the battery perpendicularly to the longitudinal axis of the battery to hold and electrically contact the first electric terminal of the battery. Therefore, the two metal contact plates of the scrape contact bounding the slot-shaped receptacle may serve as elastic elements of the plate-shaped metal element configured to provide the clamping force of the scrap contact via the contact side surfaces of the two metal contact plates.

The spring contact of the second electric contact of the battery holder is configured to provide a contact force parallel to the longitudinal axis of the battery holder to drive the battery in a direction towards the first electric contact and electrically contact the second electric terminal of the battery. This enables a consistent electrical contact, even in the event of the appliance being dropped. This helps to prevent the interruption of the power supply and loss of data or triggering a reset.

The battery system comprises a battery holder and a battery as described herein. The battery may be of one battery type of a set of batteries, wherein the battery holder and the battery correspond to each other and fit together in terms of the physical key. The metal pins of batteries of other battery types of the set of batteries, having a larger diameter than the diameter of the metal pin of the correct battery type, are prevented from being correctly inserted into the battery chamber and/or from being electrically contacted, and/or the metal pins of batteries of other battery types of the set of batteries, having a smaller diameter than the diameter of the metal pin of the correct battery type, are prevented from being reliably electrically contacted and/or having the wrong polarity.

In other words, the battery system may be configured such that the width of the open receiving slot of the isolating element of the battery holder and the diameter of the metal pin of the first electric terminal of the battery of the correct battery type are configured to match each other to enable the isolating element to receive the metal pin and allow the metal pin to electrically contact the first electric contact of the battery holder, wherein the first electric contact of the battery holder and the first electric terminal of the (correct) battery match in terms of polarity to enable an electric circuit, and wherein the battery holder is configured to prevent a battery of another incorrect battery type of the set of batteries to be received within the battery chamber of the battery holder and/or prevent the other battery type from being reliably electrically contacted.

In an embodiment of the battery holder according to the invention, the first electric contact comprises two metal contact plates each having two main surfaces extending transversely to the longitudinal axis of the battery chamber and a contact side surface connecting the two main surfaces, wherein the contact side surface of each of the two metal contact plates is arranged to electrically contact the circumferential contact surface of the metal pin of the first electric terminal of the battery at a respective one of the two mutually opposite positions on said circumferential contact surface.

In a further embodiment of the battery holder according to the invention, the two metal contact plates are integrally formed on a metal base plate of the first electric contact, wherein the first electric contact has a receiving slot arranged between the two metal contact plates and extending in a direction transverse to the longitudinal axis of the battery chamber from the metal base plate to an open end of the receiving slot, and wherein the receiving slot is configured and arranged to receive the metal pin of the first electric terminal of the battery via said open end in the receiving direction transverse to the longitudinal axis of the battery chamber. The receiving slot serves as a slot-shaped receptacle, configured to receive and electrically contact the metal pin of the first electric terminal of the battery.

In a further embodiment of the battery holder according to the invention, the receiving slot has a first end portion which diverges in a direction towards the open end of the receiving slot. This allows for an improved insertion of the battery.

In a further embodiment of the battery holder according to the invention, the receiving slot merges into a circular opening provided in the metal base plate of the first electric contact at a second end portion of the receiving slot opposite to the first end portion. This allows for an improvement in the clamping force of the scrape contact. Therefore, contact with the first electric terminal of the battery can be improved.

In a further embodiment of the battery holder according to the invention, the two metal contact plates of the first electric contact each comprise a bent flange portion arranged at a side of the metal contact plate opposite to the contact side surface of the metal contact plate. This allows for an improved stiffness of the first electric contact.

In an embodiment of the battery holder according to the invention, the battery holder further comprises an isolating element arranged at the first end portion of the battery chamber at a side of the first electric contact which faces the second electric contact, wherein the isolating element is made from an electrically non-conducting material and comprises an open receiving slot configured to receive the metal pin of the first electric terminal of the battery in the receiving direction transverse to the longitudinal axis of the battery chamber to allow the first electric contact to electrically contact the circumferential contact surface of the metal pin at the two mutually opposite positions on said circumferential contact surface.

The isolating element provided as physical key according to an aspect of the present invention may be configured as a vertical separating wall arranged between the first electric contact and the second electric contact of the battery holder and configured to separate the first electric contact and the first axial end surface of the battery housing, if the battery is inserted into the battery chamber. In other words, the isolating element may divide the battery chamber in a first part in which the first electric contact is located and a second part in which the battery housing and the second electric contact are located. The isolating element has a thickness in a direction from the second electric contact toward the first electric contact. The thickness of the isolating element is greater than a length of a metal pin of an electric terminal of a conventional battery. The thickness of the isolating element is such that the isolating element is configured to withstand a manual pushing force applied against the isolating element by means of the battery when the battery is being inserted into the battery chamber.

In this context, the isolating element being arranged at the first end portion of the battery chamber means that the isolating element is arranged closer to the first end portion of the battery chamber than to the second end portion, wherein the isolating element is configured to be arranged between the first axial end surface of the battery and the first electric contact of the battery holder, if the battery is held by the battery holder.

The open receiving slot of the isolating element may at least partially divide the isolating element in two sections to allow the metal pin of the (correct) battery to extend between the two sections through the isolating element and to reach the first electric contact of the battery holder. For instance, the open receiving slot may be a vertical slot.

In a further embodiment of the battery holder according to the invention, the isolating element comprises a wall portion extending perpendicularly to the longitudinal axis of the battery chamber and being provided with the open receiving slot of the isolating element.

The isolating element can be configured to separate the first electric contact of the battery holder and the first axial end surface of the battery by means of the wall portion. The wall portion of the isolating element is configured to block the first axial end surface of the battery in a direction towards the first electric contact of the battery holder. In other words, the wall portion is configured to prevent the battery from moving from the second end portion of the battery chamber to the first end portion of the battery chamber. The open receiving slot may further divide the wall portion of the isolating element.

In a further embodiment of the battery holder according to the invention, the isolating element extends beyond the first electric contact of the battery holder in a direction opposite to the receiving direction of the open receiving slot of the isolating element. In other words, the isolating element extends substantially perpendicular to the longitudinal axis of the battery chamber. This way the isolating element may serve as a barrier that is configured to physically block the entry of a battery of an incorrect type into the battery chamber from above and is configured to prevent a metal pin having a larger diameter than the width of the open receiving slot of the isolating element from contacting the first electric contact of the battery holder from above by means of form closure.

In a further embodiment of the battery holder according to the invention, the open receiving slot of the isolating element extends in the receiving direction, in particular at least sectionally tapers, and comprises an opening configured to receive the metal pin of the first electric terminal of the battery in the receiving direction.

The open receiving slot may be of a converging shape, which tapers inwards, in particular a wedge shape. The isolating element is thus configured to allow a metal pin having a diameter smaller than the width of the opening of the open receiving slot to contact the first electric contact of the battery holder from above in case the battery is inserted in the battery holder in the receiving direction.

In a further embodiment of the battery holder according to the invention, the open receiving slot of the isolating element has a width and/or is configured to disable the open receiving slot of the isolating element to receive a pin having a diameter larger than a predetermined threshold diameter.

The threshold diameter defines the width of the open receiving slot such that the open receiving slot is configured to receive a pin having a diameter smaller than the predetermined threshold diameter. The width of the open receiving slot hence serves as a physical key by means of form closure, in particular for preventing the insertion of an incorrect battery comprising a pin having a diameter larger than the predetermined threshold diameter.

In a further embodiment of the battery holder according to the invention, the open receiving slot of the isolating element is configured to center the metal pin towards the open end of the receiving slot of the first electric contact of the battery holder, in particular towards the longitudinal axis of the battery chamber. The electrical contact between the metal pin and the first electric contact can be improved.

In a further embodiment of the battery holder according to the invention, the open receiving slot of the isolating element comprises two inner edges arranged spaced apart from each other on both sides of the open receiving slot, wherein the inner edges define the width of the open receiving slot, wherein the inner edges are configured to prevent the insertion of a pin having a diameter greater than the width of the open receiving slot.

The inner edges may be configured to withstand a maximum expected manual insertion force applied in the receiving direction by means of an inserted battery without deformation. This way the battery holder can be prevented from being damaged. Further, the electrical circuitry can also be protected against improper electrical forced contacting.

In a further embodiment of the battery holder according to the invention, the second electric contact of the battery holder comprises at least two metal tongues, which are each flexible in the axial direction towards the first electric contact and are each configured to electrically contact the metal contact surface of the second electric terminal of the battery in an elastically deformed condition to provide the spring force in the axial direction on the metal contact surface. A consistent electrical contact can thus be provided between the second electric terminal of the battery and the second electric contact of the battery holder, even in the event of the insertion of batteries (in particular of the same types of battery) distinguishing in length of the battery housing. This helps to reliably provide the contact force between the second electric terminal of the battery and the second electric contact of the battery holder and to prevent the interruption of the power supply and loss of data or triggering a reset, even in the event of the appliance being dropped. The contact force may, e.g., be at least between 5 to 12 N, e.g. substantially 10 N.

In a further embodiment of the battery holder according to the invention, the metal tongues of the second electric contact of the battery holder are each bent relative to a base portion of the second electric contact and each taper towards an end portion which is arranged to electrically contact the metal contact surface of the second electric terminal of the battery. This allows for an improved spring force of the second electric contact.

In yet a further embodiment of the battery holder according to the invention, the at least two metal tongues of the second electric contact of the battery holder are each at least partially coated with a nickel alloy. This improves the contact force.

In an alternative embodiment of the battery holder according to the invention, the battery holder is configured for holding and electrically contacting a battery, the battery holder comprises a battery chamber configured to receive the battery; a first electric contact arranged at a first end portion of the battery chamber and configured to electrically contact a metal pin of a first electric terminal of the battery; a second electric contact arranged at a second end portion of the battery chamber opposite the first end portion and configured to electrically contact a second electric terminal of the battery; and an isolating element arranged at the first end portion of the battery chamber and having a wall portion that is arranged at a smaller distance from the first electric contact than the second electric contact, wherein the isolating element comprises an open receiving slot configured to receive the metal pin of the first electric terminal of the battery to allow the metal pin to electrically contact the first electric contact.

In a further embodiment of the battery holder according to the alternative embodiment of the invention, the first electric contact is configured as a scrape contact to electrically contact a circumferential contact surface of the metal pin of the first electric terminal of the battery at two mutually opposite positions on said circumferential contact surface, and/or the second electric contact is configured as a spring contact to electrically contact a metal contact surface of the second electric terminal of the battery by spring force of the spring contact acting in an axial direction parallel to the longitudinal axis of the battery chamber.

It should be noted that the alternative embodiment may have any of the features of the embodiments described above.

A further aspect of the present disclosure relates to a set of batteries comprising at least two different types of batteries, wherein each battery of the set of batteries comprises: a battery housing extending along a longitudinal axis of the battery housing between a first axial end surface and a second axial end surface of the battery housing; a first electric terminal provided at the first axial end surface of the battery housing, the first electric terminal comprising a metal pin protruding from the first axial end surface of the battery housing; and a second electric terminal provided at the second axial end surface of the battery housing opposite the first axial end surface, the second electric terminal being configured as a metal contact surface extending transversely to the longitudinal axis; and wherein batteries of different types distinguish by one or more of:
- the metal pins of the batteries having different diameters;
- the metal pins of the batteries have different ratios of diameter to length; and
- having the positive polarity at the first electric terminal or at the second electric terminal.

The set of batteries may comprise batteries of different types of batteries. Each type of batteries may correspond to a battery holder. The batteries of different types distinguish by at least one geometric feature, e.g. by a geometric feature of the metal pin of the first electric terminal of the battery and in particular a geometrical feature of the battery housing. The geometric feature is configured to be checked by the physical key.

The battery housing is configured to protect and isolate the inside of the battery. The battery housing may have a length and a width corresponding to the length and the width of the battery chamber of the battery holder. In particular, the battery housing may have a shape corresponding to the shape of the battery chamber of the battery holder. In particular, the battery housing may be of a cylindrical shape. In this case, the cylinder axis can define a longitudinal axis of the battery housing. The battery housing of different types of batteries may differ in terms of size and/or shape. In particular, batteries of different types may distinguish by comprising a battery housing of different diameter and/or length.

The metal pin of the first electric terminal of the battery protrudes from the first axial end surface of the battery housing over a length of the metal pin. The length of the metal pin may define a distance between the first axial end surface and a distal tip of the metal pin measured perpendicularly to the first axial end surface of the battery. The length of the metal pin is preferably greater than a length of a conventional battery pin. Furthermore, the length of the metal pin is greater than the thickness of the isolating element of the battery holder and configured to extend through the isolating element. The metal pin may have a length between 3 to 8 mm, preferably between 4 and 6 mm, e.g. substantially 5 mm. The metal pin preferably has a cylindrical shape. For instance, the metal pin may have a shape corresponding to the first electric contact of the battery holder, such that the metal pin provides a contact surface configured to ensure an electrical connection to the first electric contact if contacting the first electric contact. The metal pin of different types of batteries may differ in terms of size and/or shape. In particular, batteries of different types may distinguish by comprising metal pins of different diameters and in particular of different lengths. For instance, the batteries of at least one battery type of the set of batteries may comprise a metal pin of a larger diameter. The diameter of one of the battery types may be between 1.35 and 1.65 mm, e.g. substantially 1.5 mm, and the diameter of another battery type may be between 2.0 and 2.3 mm, e.g. substantially 2.15 mm. The metal pin comprises at least one geometric feature, configured to be checked by the physical key. For instance, the geometric feature may be the length and/or the diameter of the metal pin. The metal pin may be provided as a separate element configured to be fixed to the first axial end surface of the battery during manufacturing of the battery, in particular by spot welding.

The metal contact surface of the second electric terminal of the battery may be a flat contact surface comprising a conductive material and configured to electrically contact the second electric terminal of the battery to the second electric contact of the battery holder.

In a further embodiment of the set of batteries, the set of batteries comprises:
- batteries of a first battery type wherein the metal pin of the first electric terminal has a first diameter and the positive polarity is at the first electric terminal;
- batteries of a second battery type wherein the metal pin of the first electric terminal has a second diameter larger than the first diameter and the positive polarity is at the first electric terminal;
- batteries of a third battery type wherein the metal pin of the first electric terminal has the first diameter and the positive polarity is at the second electric terminal; and
- batteries of a fourth battery type wherein the metal pin of the first electric terminal has the second diameter and the positive polarity is at the second electric terminal.

In a further embodiment of the set of batteries, the set of batteries further comprises battery types that distinguish in that the metal pins of the first electric terminal of the different battery types have different lengths. In this way, a further feature can be provided that can be checked using the physical key.

### BRIEF DESCRIPTION OF THE DRAWINGS

These and other aspects of the invention will be apparent from and elucidated with reference to the embodiment(s) described hereinafter. In the following drawings
Fig. 1 shows an isometric diagram of an embodiment of a battery system according to the present invention;
Fig. 2 shows a top view of an embodiment of a battery holder according to the present invention holding a battery;
Fig. 3 shows an isometric diagram of an embodiment of a battery holder according to the present invention;
Fig. 4 shows an isometric diagram of an embodiment of a first electric contact of a battery holder according to the present invention;
Fig. 5 shows an isometric diagram of an embodiment of a second electric contact of a battery holder according to the present invention;
Fig. 6A shows an isometric diagram of a metal pin (small diameter) of a battery for use with the battery holder according to the present invention;
Fig. 6B shows an isometric diagram of a metal pin (large diameter) of a battery for use with the battery holder according to the present invention;
Fig. 7 shows a schematic side view of an embodiment of a battery holder according to the present invention holding a battery;
Fig. 8 shows a diagram of an embodiment of a set of batteries of different types;
Fig. 9A shows a schematic top view of an embodiment of a battery holder according to the present invention holding a battery;
Fig. 9B shows a schematic top view of an embodiment of a battery holder according to the present invention holding a battery;
Fig. 10A shows a schematic top view of an embodiment of a battery holder according to the present invention holding a battery;
Fig. 10B shows a schematic top view of an embodiment of a battery holder according to the present invention holding a battery;
Fig. 11A shows a schematic front view of an isolating element and a first electric contact of an embodiment of a battery holder according to the present invention;
Fig. 11B shows a schematic front view of an isolating element and a first electric contact of an embodiment of a battery holder according to the present invention;
Fig. 12A shows a schematic side view of an embodiment of a battery holder according to the present invention holding a battery;
Fig. 12B shows a schematic side view of an embodiment of a battery holder according to the present invention holding a battery;
Fig. 13A shows a schematic side view of an embodiment of a battery holder according to the present invention holding a battery of a correct battery type;
Fig. 13B shows a schematic side view of an embodiment of a battery holder according to the present invention holding a battery of an incorrect battery type;
Fig. 13C shows a schematic side view of an embodiment of a battery holder according to the present invention holding a conventional battery; and
Fig. 14 shows a table illustrating an example of an implementation of a set of batteries comprising batteries with different chemistries and/or capacity and their corresponding battery holders according to the present invention.

### DETAILED DESCRIPTION OF THE EMBODIMENTS

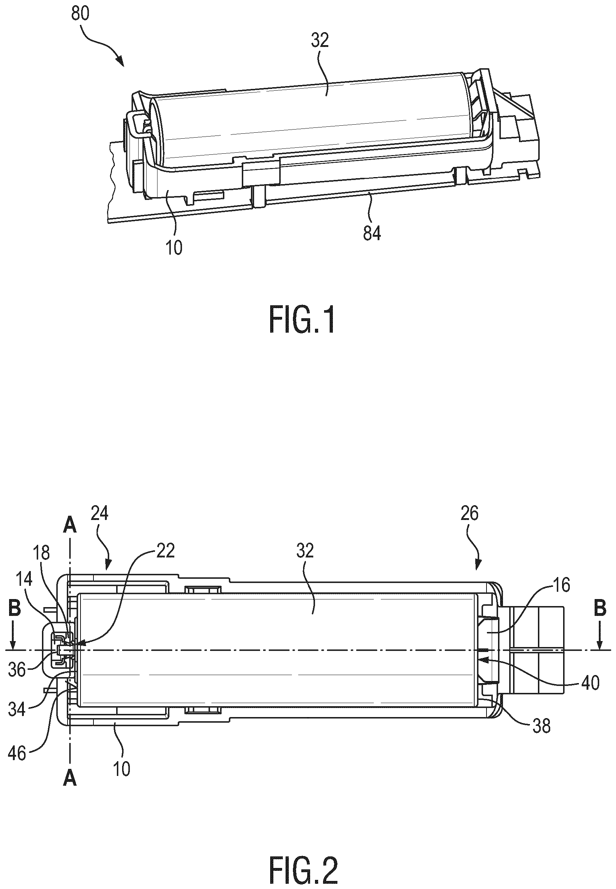

Fig. 1 shows an isometric diagram of an embodiment of a battery system 80 according to the present invention, which is configured for preventing the insertion of incorrect battery types. The battery system 80 comprises a battery holder 10 which is configured for holding and electrically contacting a battery 32. The battery holder 10 in Fig. 1 is connected to a PCBA 84. Alternatively, the battery holder 10 may be provided without the PCBA 84. In particular, the battery holder 10 may be integrated in a household appliance (not shown). Alternatively, the battery holder 10 may be insertable in the household appliance. In particular, the battery holder 10 may comprise a housing, a cover or a lid (not shown).

The battery system 80 further comprises the battery 32, which is of one battery type of a set of batteries 30 (not shown). The battery 32 can be a primary battery or a secondary battery. The battery 32 may be e.g. a NiMH or Li-Ion or LiFePo based battery. However, the battery 32 can be of a different chemistry and/or capacity and/or a different battery size.

In Fig. 1 the battery 32 is of a correct battery type. In other words, the battery holder 10 and the battery 32 of the battery system 10 correspond to each other and fit together in terms of a physical key, as will be described later.

The battery holder 10 may be a battery holder according to the present invention. The battery 32 may be a battery of a set of batteries 30. Details of the battery holder 10, the set of batteries 30 and the battery 32 will be described below.

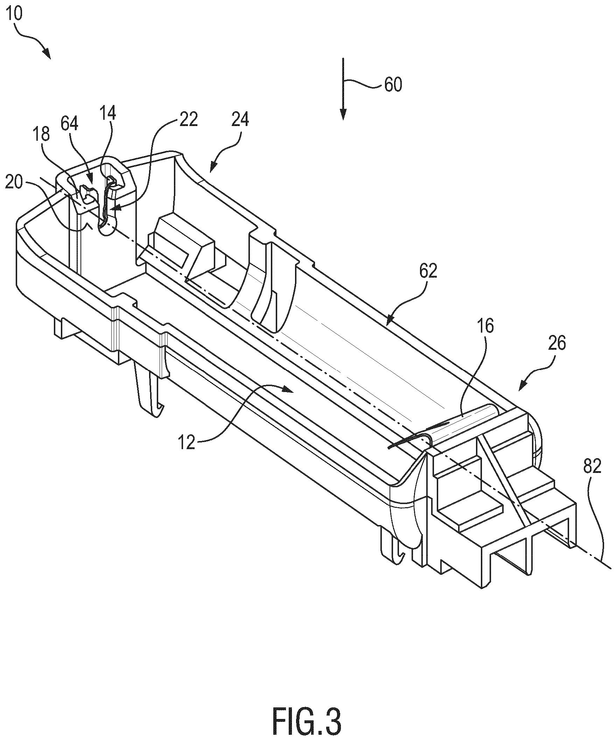

As can be seen in Fig. 1, the battery 32 is inserted into a battery chamber 12 (cf. Fig. 3) of the battery holder 10. This can also be referred to as the inserted state.

Fig. 2 shows a top view of an embodiment of a battery holder 10 according to the present invention holding a battery 32. As can be seen in Fig. 2, in the inserted state, the battery holder 10 is configured to hold the battery 32. A first electric contact 14 (also referred to as first contact) of the battery holder 10 arranged at a first end portion 24 of the battery chamber 12 is configured to electrically contact a metal pin 36 of a first electric terminal 34 (also referred to as first terminal) of the battery 32. A second electric contact 16 (also referred to as second contact) of the battery holder 10 arranged at a second end portion 26 of the battery chamber 12 is configured to electrically contact the second electric terminal 38 (also referred to as second terminal) of the battery 32.

The battery holder 10 comprises an isolating element 18. The isolating element 18 comprises an open receiving slot 22 (also referred to as open slot) configured to receive the metal pin 36 of the first terminal 34 of the battery 32 to allow the metal pin 36 to electrically contact the first contact 14.

Fig. 3 shows an isometric diagram of an embodiment of a battery holder 10 according to the present invention. In this embodiment, the battery chamber 12 is an elongated cavity arranged in the battery holder 10 for receiving the battery 32 (not shown) in a receiving direction 60. The receiving direction 60 points into the battery chamber 12 from the outside through an opening 62 of the battery chamber. The receiving direction 60 extends orthogonally to a longitudinal axis 82 of the battery chamber 12. The longitudinal axis 82 extends between the first contact 14 and the second contact 16 of the battery holder 10. In Fig. 3, the battery chamber 12 has a cylindrical shape corresponding to a shape of a housing 44 of the (correct) battery 32 (not shown; cf. Fig. 2).

The isolating element 18 is provided as a vertical separating wall arranged in the battery chamber 12 between the first contact 14 and the second contact 16. The isolating element 18 is arranged closer to the first end portion 24 of the battery chamber 12 than to the second end portion 26. The isolating element 18 is configured to separate the first contact 14 and a first axial end surface 46 of the battery 32 (cf. Fig. 2) by means of a wall portion 20, if the battery is inserted into the battery chamber 12. The wall portion 20 is configured to block the first axial end surface 46 of the battery 32 in a direction towards the first contact 14 (alongside the dashed line A-A in Fig. 2). The isolating element 18 may be made from a non-conductive material and may be integrally formed with the battery chamber 12.

The open receiving slot 22 of the isolating element 18 partially divides the isolating element 18 in two sections to allow the metal pin 36 of the (correct) battery 32 to extend between the two sections through the isolating element 18 and to reach the first contact 14 (cf. Fig. 2). As can be seen in Fig. 3, the open receiving slot 22 can be a vertical slot extending in the receiving direction 60. The wall portion 20 is divided by the open receiving slot 22 in two sections.

In this embodiment, the open receiving slot 22 comprises an opening 64 configured to receive the metal pin 36 of the (correct) battery 32 in the receiving direction 60. As can be seen in Fig. 3, the open receiving slot 22 can sectionally taper, particularly departing from the opening 64.

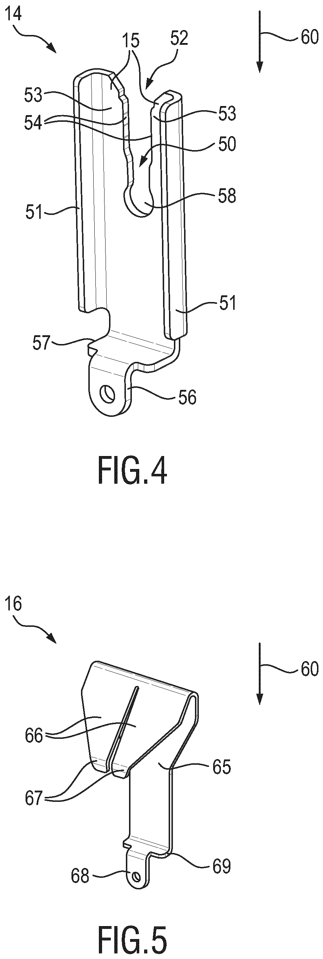

Fig. 4 shows an isometric diagram of an embodiment of a first contact 14 of a battery holder 10 according to the present invention. The first contact is a plate-shaped metal element, in particular formed from sheet metal.

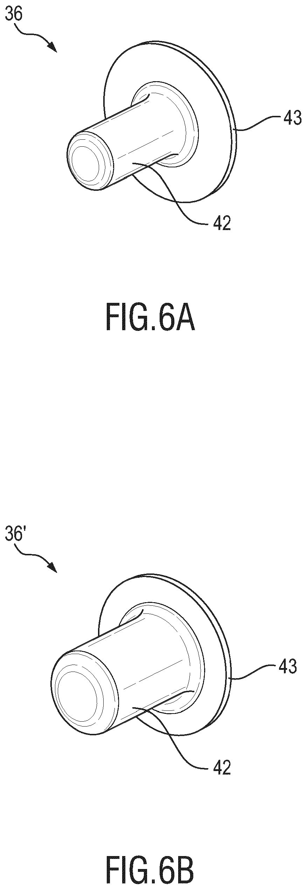

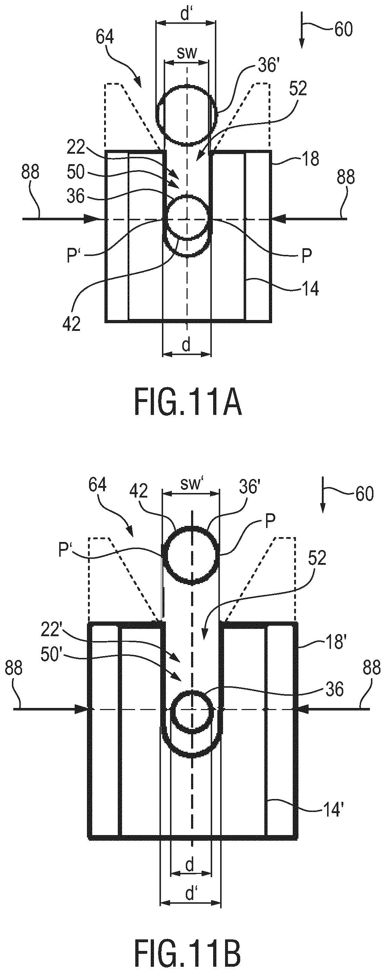

In Fig. 4, the first electric contact 14 is configured as a scrape contact to electrically contact a circumferential contact surface 42 (cf. Fig. 6) of the metal pin 36 of the first terminal 34 of the battery 32 at two mutually opposite positions on said circumferential contact surface. The scrape contact 14 comprises two metal contact plates 15, each having two main surfaces 53 extending transversely to the longitudinal axis of the battery chamber, and a contact side surface 54 connecting the two main surfaces 53, wherein the contact side surface 54 of each of the two metal contact plates 15 is arranged to electrically contact the circumferential contact surface of the metal pin of the first electric terminal of the battery at a respective one of the two mutually opposite positions on said circumferential contact surface. In particular, the scrape contact 14 comprises a receiving slot 50, also referred to as slot-shaped receptacle 50, configured to receive and electrically contact the metal pin 36 of the first electric terminal 34 of the battery 32. In this embodiment, the slot-shaped receptacle 50 diverges in a direction towards an open end 52 of the slot-shaped receptacle 50, particularly in a direction opposite to the receiving direction 60. As can be seen in Figs. 11A and 11B, the slot-shaped receptacle 50 is configured to be lined up with the open receiving slot 22 of the isolating element 18 such that the metal pin 36 can be received by the slot-shaped receptacle 50 and the open receiving slot 22 at the same time. In this embodiment, the scrape contact 14 is configured to provide a clamping force (cf. Fig. 11) perpendicularly to the longitudinal axis 82 (cf. Fig. 3) to hold and electrically contact the first terminal 34 of the battery 32. Therefore, the slot-shaped receptacle 50 comprises the two inwardly facing contact side surfaces 54, which are configured to provide the clamping force against the circumferential contact surface 42 (cf. Fig. 6) of the metal pin 36. Alternatively, the plate-shaped metal element 14 can comprise two metal blades which are separated by the slot-shaped receptacle 50, and which are flexible in directions perpendicular to the longitudinal axis 82 and configured to provide the clamping force.

The first contact 14 is configured to be arranged in the battery chamber 12 and to extend substantially in a direction opposite to the receiving direction 60, in particular transversely or orthogonally to the longitudinal axis 82. Therefore, the first contact 14 can comprise a fastening member 56 at a bent section 57. The fastening member 56 can be configured to serve as an electrical connector to connect the first contact 14 to the PCBA 84 or the electrical circuitry of the appliances.

The slot-shaped receptacle 50 of the first electric contact 14 of the battery holder 10 may merge into a circular opening 58 provided in a metal base plate of the first electric contact 14 at a second end portion of the receiving slot 50 opposite to the first end portion. The metal base plate and the two metal contact plates 15 of the first electric contact 14 can comprise bent flange portions 51 arranged at a side of the metal contact plates 15 opposite to the contact side surface 54 of the metal contact plates 15. The bent flange portions 51 are configured to stiffen the first electric contact 14.

Fig. 5 shows an isometric diagram of an embodiment of a second contact 16 of a battery holder 10 according to the present invention. In this embodiment, the second contact 16 is configured as a spring contact. The spring contact 16 is configured as a spring plate that is bent once. The spring contact 16 is configured to electrically contact a metal contact surface 40 (cf. Fig. 2) of the second terminal 38 of the battery 32 by spring force of the spring contact acting in an axial direction parallel to the longitudinal axis 82 of the battery chamber 12. The metal contact surface 40 extends transversely to a longitudinal axis 31 of the battery housing 44 of the battery 32.

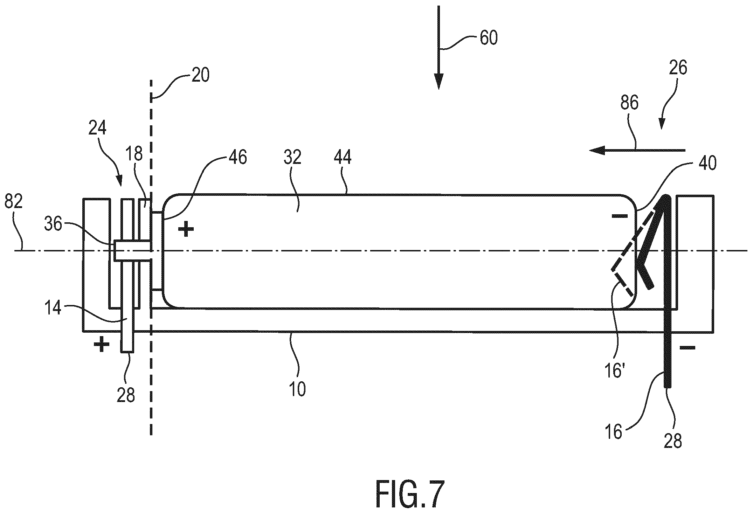

The second contact 16 is configured to provide a contact force parallel to the longitudinal axis 82 to drive the battery 32 in a direction towards the first contact 14 and electrically contact the metal contact surface 40 of the second terminal 38 of the battery 32 (see also Fig. 7). In this embodiment, the second contact 16 comprises two metal tongues 66, which are flexible in the direction towards the first contact 14 (cf. Fig. 7). The metal tongues 66 are configured to electrically contact the metal contact surface 40 of the second terminal 38 of the battery 32 and provide, in an elastically deformed condition, the contact force on the metal contact surface 40 of the second terminal 38 of the battery 32. The metal tongues 66 of the second electric contact 16 of the battery holder 10 are each bent relative to a base portion 65 of the second electric contact 16 and each taper towards a respective end portion 67 which is arranged to contact the metal contact surface 40 of the second terminal 38 of the battery 32.

The second contact 16 and/or the metal tongues 66 can at least partially be coated with a nickel alloy. The second contact 16 is configured to be arranged in the battery chamber 12 and to extend substantially in a direction opposite to the receiving direction 60, in particular transversely or orthogonally to the longitudinal axis 82 of the battery chamber 12. Therefore, the second contact 16 can comprise a fastening member 68 at a bent section 69. The fastening member 68 can be configured to serve as an electrical connector to connect the second contact 16 to the PCBA 84 or the electrical circuitry of the appliances.

Fig. 6A shows an isometric diagram of a metal pin 36 (small diameter) of a battery 32 for use with a battery holder according to the present invention. Fig. 6B shows an isometric diagram of a metal pin 36' (large diameter) of a battery 32 for use with a battery holder according to the present invention. As can be seen in Figs. 6A and 6B, the metal pins 36, 36' are each of a cylindrical shape. However, other shapes are also feasible. The metal pins 36, 36' each have a length measured from the first axial end surface 46 of the battery housing 44, if the metal pin 36, 36' is arranged at the first axial end surface 46 (cf. Fig. 2). In Figs. 6A and 6B, the metal pins 36, 36' each comprise a flange 43 configured to be attached to the first axial end surface 46 of the battery 32 during manufacturing of the battery, in particular by spot welding.

In Fig. 6A, the metal pin 36 has a shape corresponding to the first contact 14 of the battery holder 10 in Fig. 4, such that the metal pin 36 provides the circumferential contact surface 42 as a contact surface configured to contact the inwardly facing contact side surfaces 54 of the first contact 14. Thereby, the metal pin 36 is configured to ensure an electrical connection of the battery 32 to the first contact 14 if contacting the first contact 14. In Fig. 6B, the metal pin 36' has a larger diameter than the diameter of the metal pin 36 in Fig. 6A. The metal pin 36' therefore may not fit into the first contact 14 in Fig. 4. The geometric features of the metal pins 36, 36', such as the length and diameter, are described in more detail below.

Fig. 7 shows a schematic side view of an embodiment of a battery holder 10 according to the present invention holding a battery 32. The side view may be a schematic section view alongside dashed line B-B of Fig. 2. As can be seen in Fig. 7, the length of the metal pin 36 of the first terminal 34 of the battery 32 is greater than the thickness of the isolating element 18 measured in the direction of the longitudinal axis 82 of the battery chamber 12. Therefore, the metal pin 36 is configured to extend through the isolating element 18 and to contact the first contact 14. The other parts of the battery 32, in particular the first axial end surface 46 of the battery housing 44 is blocked by the wall portion 20 (in Fig. 7 represented by the dashed line, see also dashed line A-A in Fig. 2).

The second contact 16 is, as mentioned above, flexible in the direction towards the first contact 14 and configured to electrically contact the metal contact surface 40 of the second terminal 38 of the battery 32 and provide, in an elastically deformed condition, a contact force (in Fig. 7 represented by the arrow 86) on the metal contact surface 40 of the second terminal 38 of the battery 32. Fig. 7 shows by dashed lines the second contact 16' in an undeformed condition when the battery 32 is not present in the battery holder, and shows the second contact 16 in the deformed condition when the battery 32 is inserted into the battery holder 10 in the receiving direction 60.

Due to the contact force 86 the metal pin 36 is reliably pushed into the first contact 14 to provide for a consistent electrical contact, even if batteries distinguishing in the length of the battery housing 44 (measured parallel to the longitudinal axis 31 of the battery housing 44) are inserted into the battery holder 10. In other words, the second contact 16 can compensate, although to a limited extent, a variety in length of the battery housing 44 due to its elastic deformation. In particular, the contact force 86 is at least between 5 to 12 N, e.g. around 10 N.

Fig. 7 illustrates how the first and second contacts 14, 16 of the battery holder 10 are in contact with the first and second terminals 36, 40 of the battery 32 in such a way that an electrical connection is provided between each pair of connectors (i.e., between first contact 14 and first terminal 36 as well as between second contact 16 and second terminal 40) and the battery 32 is in contact with the correct polarities, so that the battery holder 10 is electrically contacting the battery 32 in a correct way and is configured to power the electrical circuitry by means of the battery 32. Therefore, the limps 28 of the first contact 14 and the second contact 16 may be connected to a PCBA or to the circuitry.

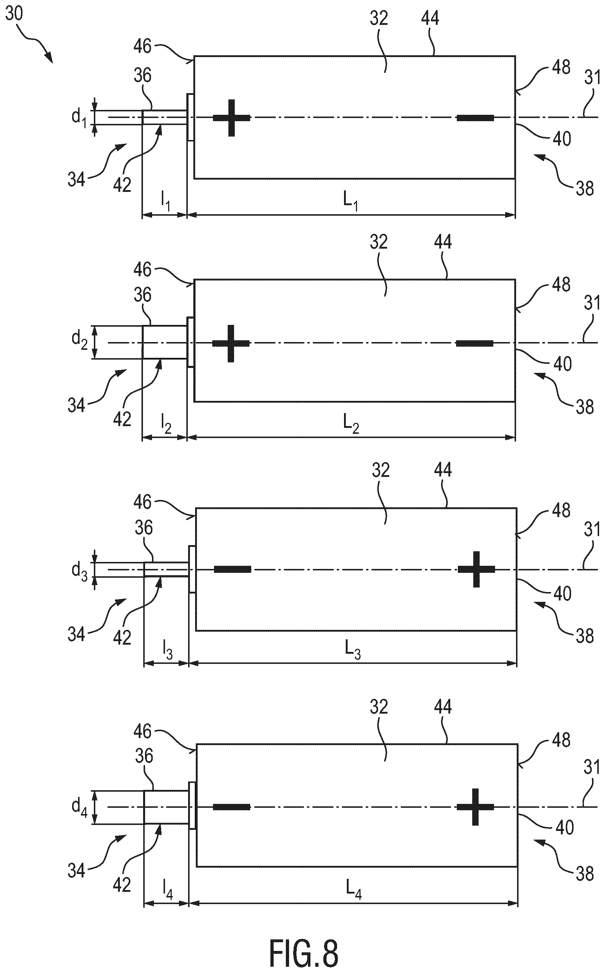

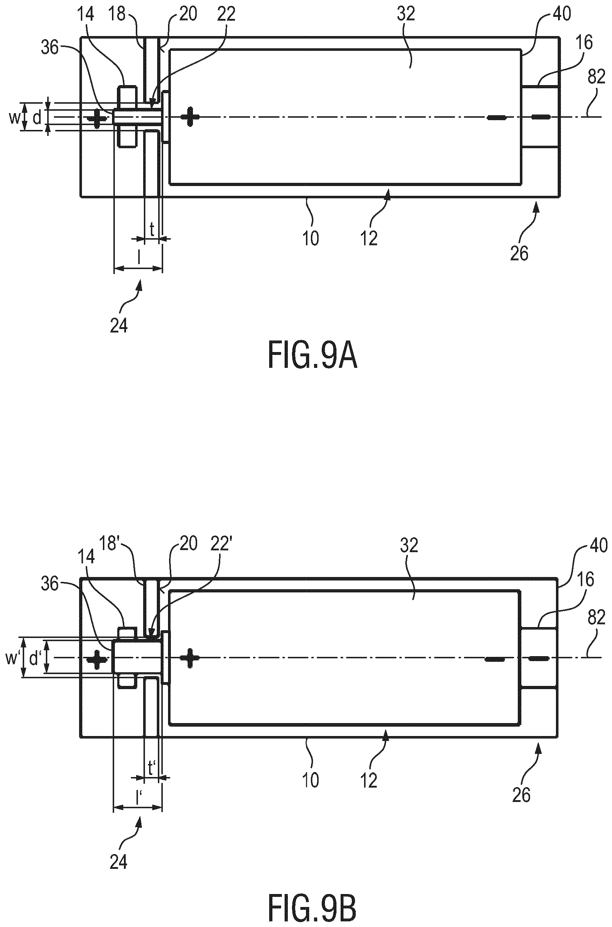

Fig. 8 shows a diagram of an embodiment of a set of batteries 30. The set of batteries 30 comprises batteries 32 of different types of batteries. In this embodiment, the set of batteries 30 comprises four different types of batteries. In an alternative embodiment, the set of batteries may comprise another number of types of batteries. Each type of batteries may correspond to or be configured for use with a battery holder according to the invention, as will be described below with reference to Figs. 9A to 10B.

Each battery 32 of the set of batteries 30 comprises a battery housing 44 extending along a longitudinal axis 31 between a first axial end surface 46 and a second axial end surface 48 of the battery housing 44. Each battery 32 of the set of batteries 30 further comprises a first terminal 34 provided at the first axial end surface 46 of the battery housing 44. The first terminal 34 of each battery 32 comprises a metal pin 36 protruding from the first axial end surface 46 of the battery housing 44. Each battery 32 of the set of batteries 30 further comprises a second terminal 38 provided at the second axial end surface 48 of the battery housing 44 opposite the first axial end surface 46. The second terminal 38 of each battery 32 comprises a metal contact surface 40 which extends transversely to the longitudinal axis 31 of the battery housing 44.

The batteries 32 of different battery types differ from each other by at least one geometrical feature, e.g., by a geometrical feature of the metal pin 36, such as a diameter (d) and/or a length (l) of the metal pin 36 and, in particular, a geometrical feature of the battery housing 44, such as a length (L) or a shape of the battery housing 44. The geometrical feature is configured to be checked by the physical key of the battery holder 10.

In this embodiment, the set of batteries 30 comprises batteries of a first battery type wherein the metal pin 36 has a first diameter d1 and the positive polarity of the battery 32 is at the first terminal 34. The set of batteries 30 further comprises batteries of a second battery type wherein the metal pin 36 has a second diameter d2 larger than the first diameter d1 and the positive polarity of the battery 32 is at the first terminal 34. The set of batteries 30 further comprises batteries of a third battery type wherein the metal pin 36 has a third diameter d3 (in this embodiment, the third diameter d3 is equal to the first diameter d1) and the positive polarity of the battery 32 is at the second terminal 38. And the set of batteries 30 further comprises batteries of a fourth battery type wherein the metal pin 36 has a fourth diameter d4 (in this embodiment, the fourth diameter d4 is equal to the second diameter d2) larger than the third diameter d3 and the positive polarity of the battery 32 is at the second terminal 38. However, in an alternative embodiment, the diameters d1 to d4 of the different types of batteries may all differ from one another. The batteries of the first, second, third and fourth battery types are successively shown in Fig. 8.

The metal pins 36 of all four types of batteries of the set of batteries 30 have the same length l1-l4. However, in an alternative embodiment, the lengths l1-l4 of different types of batteries may differ from one another.

The battery housings 44 of all four types of batteries of the set of batteries 30 have the same length L1-L4 measured parallel to the longitudinal axis 31 of the battery housing. However, in an alternative embodiment, the lengths L1-L4 of the different types of batteries may differ from one another. The battery housings 44 are each of a cylindrical shape, having the same diameter. However, in an alternative embodiment, the diameter of the battery housing 44 of different types of batteries may differ from one another. The battery housings 44 have a shape corresponding to the shape of a battery chamber 12 of a battery holder 10 according to the invention, as will be described below in Figs. 9A to 10B.

In this embodiment, the diameter d1, d3 of each metal pin 36 of the first and the third battery types is e.g. between 1.35 and 1.65 mm, e.g. around 1.5 mm. The diameter d2, d4 of each metal pin 36 of the second and the fourth battery types is e.g. between 2.0 and 2.3 mm, e.g. around 2.15 mm. The metal pins may be provided as a separate element configured to be attached to the first axial end surface 46 of the battery 32 during manufacturing of the battery 32, in particular by spot welding.

Figs. 9A - 10B show schematic top views of embodiments of a battery holder 10 according to the present invention which are each configured for holding a respective different battery 32 of the set of batteries 30 shown in Fig. 8, and illustrate a use of the physical key of the battery holder 10. In Figs. 9A - 10B, each battery 32 is held in the inserted state in the battery holder 10. The battery holder 10 and the battery 32 may therefore also be referred to as the battery system 80. In Figs. 9A - 10B, each battery 32 is inserted correctly, in particular in the same way as already described above with reference to Fig. 7.

In these embodiments of the battery holder 10, each battery holder 10 is configured to receive a battery 32 having a cylindrical shape. Therefore, the battery chamber 12 of the battery holder 10 may be cylindrical. In this case, the cylinder axis can define a longitudinal axis 82 of the batter holder 10, respectively of the battery chamber 12. In the inserted state, the longitudinal axis 82 of the battery chamber 12 and the longitudinal axis 31 of the battery 32 may be aligned. A length of the battery chamber 12 of the battery holder 10 is greater than the length L1-L4 of the battery 32. The second contact 16 of the battery holder 10 is configured as a spring contact and electrically contacts the metal contact surface 40 of the second terminal 38 of the battery 32 by spring force of the spring contact acting in an axial direction parallel to the longitudinal axis 82 of the battery chamber 12. By means of the elastically deformable second contact 16, the battery holder 10 can adapt, although to a limited extent, to the length L1-L4 of the battery 32, as it has been described above with reference to Fig. 7.

The metal pin 32 of each battery 32 comprises at least one geometrical feature, configured to be checked by the physical key of the respective battery holder 10. In this example, the geometrical feature is the length l (in particular, length l1-l4 indicated in Fig. 8) and the diameter d (in particular, diameter d1-d4 indicated in Fig. 8) of the metal pin 36.

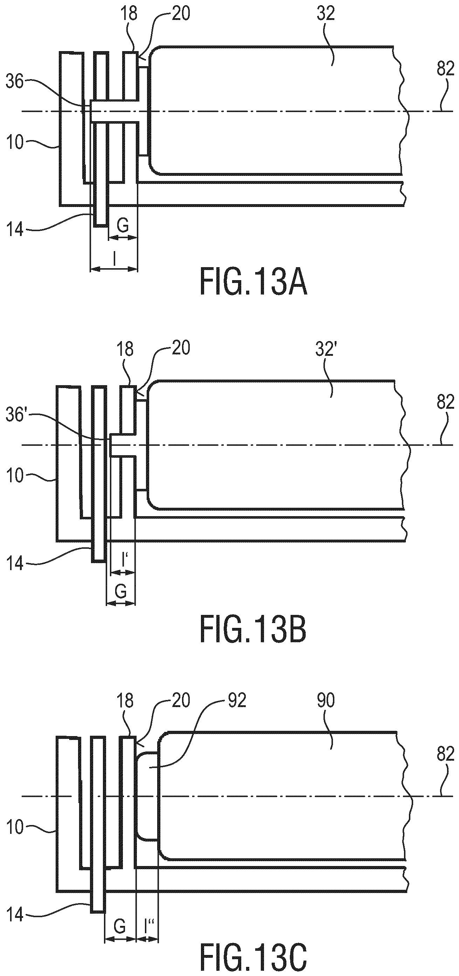

The length l of the metal pin 36 defines a dimension of the metal pin 36 measured parallel to the longitudinal axis 31 of the battery housing 44. As can be seen in Figs. 9A - 10B, the length 1, l' of each metal pin 36 is greater than the length l" of a metal pin terminal of a conventional battery (see also Fig. 13C).

In these embodiments, the isolating element 18, 18' of each respective battery holder 10 has a thickness t, t' in a direction from the second contact 16 toward the first contact 14, i.e., parallel to the longitudinal axis 82 of the battery chamber 12. The thickness t, t' of each isolating element 18, 18' may be greater than a length l" of a metal pin terminal of a conventional battery. The thickness t, t' of each isolating element 18, 18' is such that the isolating element 18, 18' is configured to allow the metal pin 36 having a length greater or equal to the length 1, l' to reach the first contact 14. This way the length 1, l' of the metal pin 36 can be checked by the physical key of the battery holder 10. In other words, it can be checked whether or not the metal pin 36 has a certain length 1, l' enabling the metal pin 36 to pass the isolating element 18, 18' and to reach the first contact 14.

In these embodiments, the open receiving slot 22, 22'of the isolating element 18, 18' of each respective battery holder 10 has a width w, w' in a direction perpendicular to the longitudinal axis 82 of the battery chamber 12. The width w, w' of the open receiving slot 22, 22' of each isolating element 18, 18' is such that the isolating element 18, 18' is configured to allow the metal pin 36 having a diameter d, d' smaller than the width w, w' to pass the isolating element 18, 18'. This way the diameter d, d' of the metal pin 36 can be checked by the physical key of the battery holder 10.

In other words, each battery holder 10 and each inserted battery 32 in Figs. 9A - 10B correspond to each other, i.e., they are configured to be used together and they fit together in terms of the physical key. In particular, the metal pins 36 of batteries 32 of other battery types of the set of batteries 30 having a diameter d' larger than the width w of the isolating element 18 are prevented from passing through the isolating element 18, and/or the metal pins 36 of batteries 32 of other battery types of the set of batteries 30 having a diameter d smaller than the width w' of the isolating element 18' are prevented from being reliably electrically contacted by the first electric contact 14 of the battery holder 10.

Fig. 9A shows a schematic top view of an embodiment of a battery holder 10 according to the present invention holding a battery 32. The battery holder 10 is configured for use with the battery 32 of the first battery type as discussed here before with reference to Fig. 8.

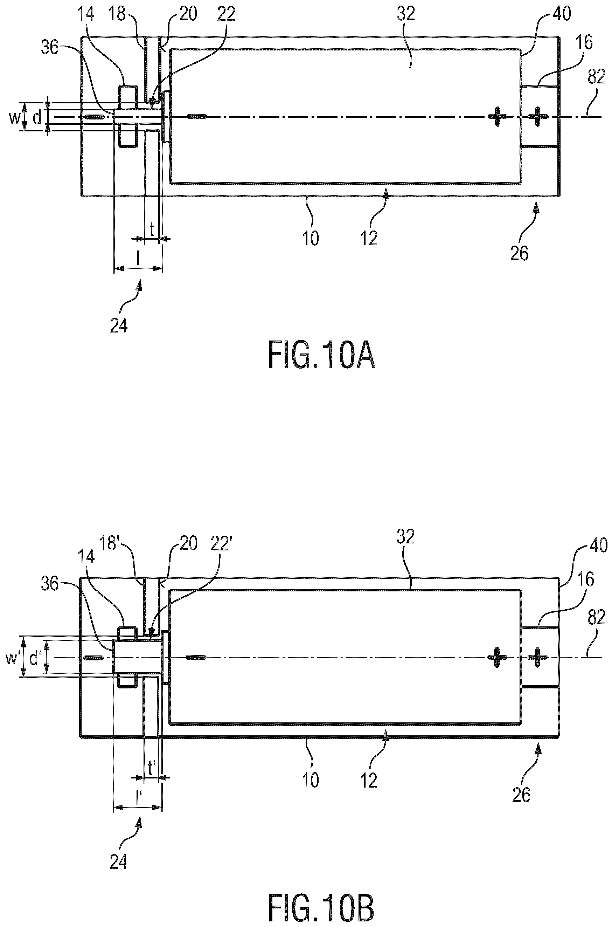

In Fig. 9A, the open receiving slot 22 of the isolating element 18 has the width w. The width w is set according to a threshold diameter for the metal pin 36 of the battery 32. Therefore, the open receiving slot 22, respectively the isolating element 18, is configured to prevent the insertion of a metal pin 36 having a diameter larger than the predetermined threshold diameter. For instance, the isolating element 18 is configured to prevent the insertion of the metal pin 36 having the diameter d' of the batteries 32 shown in Fig. 9B and 10B.

Thus, the open receiving slot 22 is configured to receive a metal pin 36 having the diameter d. The diameter d may be the diameter d1 indicated in Fig. 8. This way, the width w of the open receiving slot 22 serves as a physical key by means of form closure.

The battery holder 10 of Fig. 9A further prevents the user from inserting the battery 32 of the first battery type of Fig. 8 in an incorrect reverse orientation into the battery chamber 12, i.e., with the positive polarity of the battery 32 in electric contact with the second (negative) electric contact 16 of the battery holder 10 and/or with the negative polarity of the battery 32 in electric contact with the first (positive) electric contact 14 of the battery holder 10. I.e., in case the user intends to insert the battery 32 in said reverse orientation, at least the isolating element 18 will prevent the second (negative) electric terminal 38 of the battery 32 from contacting the first (positive) electric contact 14 of the battery holder 10.

Fig. 9B shows a schematic top view of an embodiment of a battery holder 10 according to the present invention holding a battery 32. The battery holder 10 is configured for use with the battery 32 of the second battery type as discussed here before with reference to Fig. 8.

In Fig. 9B, the open receiving slot 22' of the isolating element 18' has the width w'. The width w' is set according to a (further) threshold diameter for the metal pin 36 of the battery 32. Therefore, the open receiving slot 22', respectively the isolating element 18', is configured to prevent the insertion of a metal pin 36 having a diameter larger than the (further) predetermined threshold diameter.

Thus, the open receiving slot 22' is configured to receive a metal pin 36 having the diameter d' (the diameter d' may be the diameter d2 indicated in Fig. 8), but also a metal pin 36 having the diameter d indicated in Fig. 9A and 10A. Hence, the open receiving slot 22' cannot discriminate between the metal pins with the diameters d and d'. Therefore, the open receiving slot 22' cannot provide for a physical key to discriminate between the metal pins with the diameters d and d'. However, an additional physical key can be provided by the scrape contact of the first electric contact 14 of the battery holder 10, as will be described in detail below with reference to Figs. 11A and 11B.

The battery holder 10 of Fig. 9B further prevents the user from inserting the battery 32 of the second battery type of Fig. 8 in an incorrect reverse orientation into the battery chamber 12, i.e., with the positive polarity of the battery 32 in electric contact with the second (negative) electric contact 16 of the battery holder 10 and/or with the negative polarity of the battery 32 in electric contact with the first (positive) electric contact 14 of the battery holder 10. I.e., in case the user intends to insert the battery 32 in said reverse orientation, at least the isolating element 18' will prevent the second (negative) electric terminal 38 of the battery 32 from contacting the first (positive) electric contact 14 of the battery holder 10.

Fig. 10A shows a schematic top view of an embodiment of a battery holder 10 according to the present invention holding a battery 32. The battery holder 10 is configured for use with the battery 32 of the third battery type as discussed here before with reference to Fig. 8.

In Fig. 10A, the open receiving slot 22 of the isolating element 18 has the width w (same as the width w indicated in Fig. 9A). However, the width w can be different. The width w is set according to a threshold diameter for the metal pin 36 of the battery 32. Therefore, the open receiving slot 22, respectively the isolating element 18, is configured to prevent the insertion of a metal pin 36 having a diameter larger than the predetermined threshold diameter. For instance, the isolating element 18 is configured to prevent the insertion of the metal pin 36 having the diameter d' of the batteries 32 shown in Figs. 9B, 10B. Further, the open receiving slot 22 is configured to receive a metal pin 36 having the diameter d (the diameter d may be the diameter d3 indicated in Fig. 8). This way, the width w of the open receiving slot 22 serves as a physical key by means of form closure.

The battery holder 10 of Fig. 10A further prevents the user from inserting the battery 32 of the third battery type of Fig. 8 in an incorrect reverse orientation into the battery chamber 12, i.e., with the negative polarity of the battery 32 in electric contact with the second (positive) electric contact 16 of the battery holder 10 and/or with the positive polarity of the battery 32 in electric contact with the first (negative) electric contact 14 of the battery holder 10. I.e., in case the user intends to insert the battery 32 in said reverse orientation, at least the isolating element 18 will prevent the second (positive) electric terminal 38 of the battery 32 from contacting the first (negative) electric contact 14 of the battery holder 10.

Fig. 10B shows a schematic top view of an embodiment of a battery holder 10 according to the present invention holding a battery 32. The battery holder 10 is configured for use with the battery 32 of the fourth battery type as discussed here before with reference to Fig. 8.

In Fig. 10B, the open receiving slot 22' of the isolating element 18' has the width w'. The width w' is set according to a (further) threshold diameter for the metal pin 36 of the battery 32. Therefore, the open receiving slot 22', respectively the isolating element 18', is configured to prevent the insertion of a metal pin 36 having a diameter larger than the (further) predetermined threshold diameter. Further, the open receiving slot 22' is configured to receive a metal pin 36 having the diameter d' (the diameter d' may be the diameter d4 indicated in Fig. 8), but also having the diameter d indicated in Fig. 9A and 10A. Hence, the open receiving slot 22' cannot discriminate between the metal pins with the diameters d and d'. Therefore, the open receiving slot 22' cannot provide for a physical key to discriminate between the metal pins having the diameters d and d'. However, an additional physical key can be provided by the scrape contact of the first electric contact 14 of the battery holder 10, as will be described in detail below with reference to Figs. 11A and 11B.

The battery holder 10 of Fig. 10B further prevents the user from inserting the battery 32 of the fourth battery type of Fig. 8 in an incorrect reverse orientation into the battery chamber 12, i.e., with the negative polarity of the battery 32 in electric contact with the second (positive) electric contact 16 of the battery holder 10 and/or with the positive polarity of the battery 32 in electric contact with the first (negative) electric contact 14 of the battery holder 10. I.e., in case the user intends to insert the battery 32 in said reverse orientation, at least the isolating element 18' will prevent the second (positive) electric terminal 38 of the battery 32 from contacting the first (negative) electric contact 14 of the battery holder 10.

Figs. 11A and 11B show schematic front views (alongside the longitudinal axis 82 of the battery chamber 12 and illustrated by the intersection of the dashed lines) of isolating elements 18, 18' and first contacts 14, 14' of different embodiments of a battery holder 10 according to the present invention.

As can be seen, the first contact 14, 14' is configured as a scrape contact and comprises a slot-shaped receptacle 50, 50' configured to receive and electrically contact the metal pin 36, 36' of the first terminal 34 of the battery 32 (not shown). In these embodiments, the slot-shaped receptacle 50, 50' is lined up with the open receiving slot 22, 22' of the isolating element 18, 18' such that a metal pin can be received by the slot-shaped receptacle 50, 50' of the first contact 14, 14' and the open receiving slot 22, 22' of the isolating element 18, 18' at the same time. The scrape contact 14, 14' is configured to provide a clamping force 88 perpendicularly to the longitudinal axis 82, respectively to the receiving direction 60, to hold and electrically contact the first terminal 34 of the battery 32.

As indicated by the dashed lines in Fig. 11A and 11B, the isolating element 18, 18'may extend beyond the first contact 14, 14' in a direction opposite to the receiving direction 60 of the battery. This way the isolating element 18, 18' may serve as a barrier that is configured to prevent a metal pin having a diameter larger than the width w, w' (cf. Figs. 9A - 10B) of the open receiving slot 22, 22' of the isolating element 18, 18' from contacting the first contact 14, 14' from above by means of form closure.

The open receiving slot 22, 22' of the isolating element 18, 18' comprises an opening 64 configured to receive the metal pin 36, 36' in the receiving direction 60. The open receiving slot 22, 22' may be of a converging shape, which tapers inwardly, in particular a wedge shape (cf. the dashed lines). Therefore, the open receiving slot 22, 22' may be configured to center the metal pin 36, 36' towards an open end 52 of the slot-shaped receptacle 50, 50' of the first contact 14, 14', in particular towards the longitudinal axis 82 of the battery chamber 12.

Fig. 11A shows a schematic front view of an isolating element 18 and a first contact 14 of an embodiment of a battery holder 10 according to the present invention, in particular of the battery holder 10 shown in Fig. 9A and/or 10A.

In Fig. 11A the isolating element 18 and the first contact 14 are configured for use with a battery having a metal pin 36 having a diameter d as indicated in Fig. 11A. The diameter d may be the same diameter as the diameter d indicated in Figs. 9A and 10A. The open receiving slot 22 of the isolating element 18 is configured to receive the metal pin 36 with the diameter d to allow the metal pin 36 to electrically contact the first contact 14 (configured as scrape contact). As can be seen in Fig. 11A, the scrape contact 14 comprises a slot-shaped receptacle 50. The slot-shaped receptacle 50 has a scrape gap width sw corresponding to the diameter d of the metal pin 36 and allows for a scraping contact between the metal pin 36 and the first contact 14. I.e., the scrape contact 14 is configured to electrically contact the circumferential contact surface 42 of the metal pin 36 at two mutually opposite positions P, P' on said circumferential contact surface 42, as shown in Fig. 11A. This way, the first contact 14 is able to electrically contact the metal pin 36 in a secure way. In addition, the scrape gap width sw of the first contact 14 defines an additional physical key for the battery holder 10 to discriminate between the different battery types.

Further, the isolating element 18 is configured to prevent the access to the first contact 14 by means of form closure for a metal pin 36' having the diameter d' larger than the diameter d. The diameter d' may be the same as the diameter d' indicated in Figs. 9B and 10B.

Fig. 11B shows a schematic front view of an isolating element 18' and a first contact 14' of an embodiment of a battery holder 10 according to the present invention, in particular of the battery holder 10 shown in Fig. 9B and/or 10B.

In Fig. 11B the isolating element 18' and the first contact 14' are configured for use with a battery having a metal pin 36' having a diameter d' larger than the diameter d, as indicated in Fig. 11B. The diameter d' may be the same diameter as the diameter d' indicated in Figs. 9B and 10B. The open receiving slot 22' of the isolating element 18' is configured to receive the metal pin 36' with the diameter d' to allow the metal pin 36' to electrically contact the first contact 14' (configured as scrape contact). As can be seen in Fig. 11B, the scrape contact 14' comprises a slot-shaped receptacle 50'. The slot-shaped receptacle 50' has a scrape gap width sw' corresponding to the diameter d' of the metal pin 36' and allows for a scraping contact between the metal pin 36' and the first contact 14'. I.e., the scrape contact 14' is configured to electrically contact the circumferential contact surface 42 of the metal pin 36' at two mutually opposite positions P, P' on said circumferential contact surface 42, as shown in Fig. 11B. This way, the first contact 14' is able to electrically contact the metal pin 36' in a secure way.

As can further be seen in Fig. 11B, and as discussed here before with reference to the embodiments of the battery holder 10 shown in Fig. 9B and 10B, due to the smaller diameter d of the metal pin 36, the isolating element 18' is not able to prevent the access to the first contact 14' by means of form closure for the metal pin 36 with the smaller diameter d. The diameter d may be the same as the diameter d indicated in Figs. 9A and 10A. However, as shown in Fig. 11B the scrape gap width sw' of the slot-shaped receptacle 50' will prevent that a metal pin 36, having a diameter smaller than the scrape gap width sw' (such as the metal pin with the smaller diameter d), is able to reliably electrically contact the first contact 14', even in case the metal pin 36 is able to reach the first contact 14' via the open receiving slot 22'of the isolating element 18'. Preferably, the scrape gap width sw' may be such that the metal pin 36 with the smaller diameter d does not touch the first contact 14', if the battery 32 is inserted into the battery chamber 12. In this way, an additional physical key is provided by the first contact 14' having a certain shape.

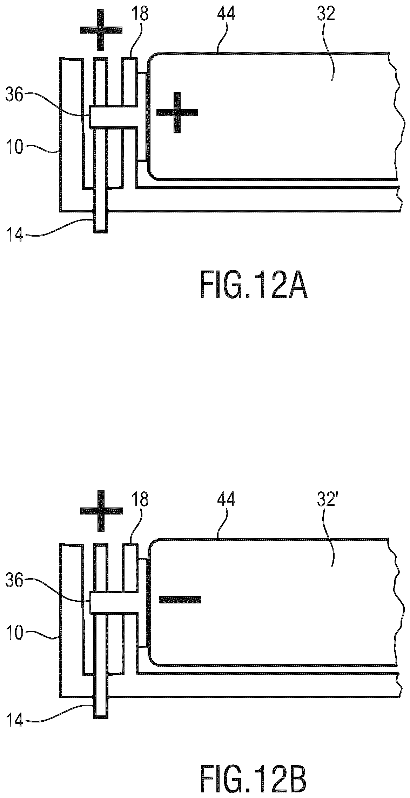

Figs. 12A and 12B show schematic side views of an embodiment of a battery holder according to the present invention holding a battery. The side view may be a schematic section view alongside dashed line B-B of Fig. 2.

Fig. 12A shows the battery holder 10 holding a battery 32 having its positive polarity at the first terminal 34 (i.e., at the metal pin 36). Fig. 12A may show the battery holder 10 of Fig. 9A holding the battery 32 of Fig. 9A. As can be seen, the battery 32 is inserted correctly. In particular, the positive polarity of the battery 32 is connected with the positive polarity of the battery holder 10, which is at the first contact 14 of the battery holder 10.

Fig. 12B shows the battery holder 10 as shown in Fig. 12A, but now holding a battery 32 having its negative polarity at the first terminal 34 (i.e., at the metal pin 36). Fig. 12B may show the battery holder 10 of Fig. 9A holding the battery 32 of Fig. 10A. Although in Fig. 12B the battery 32 is inserted correctly, i.e., with the metal pin 36 being in contact with the first contact 14, the battery 32 should not be electrically connected to the electrical circuitry of the appliance or the PCBA 84 via the battery holder 10, because the battery 32 has a wrong polarity. In particular, in this case the physical key of the battery holder 10, as described here before, cannot prevent the use of an incorrect battery type. For such a case, an additional electrical key may be provided as an aspect of the electrical circuitry of the appliance or the PCBA 84 configured to ensure that an incorrect battery (i.e. a battery having a wrong or inverted polarity) cannot be connected to the electrical circuit. Such an additional electrical key may be provided in any known way, e.g. by means of suitable electronic components such as diodes.

Figs. 13A to 13C show schematic side views of an embodiment of a battery holder 10 according to the present invention. The side view may be a schematic section view alongside dashed line B-B of Fig. 2. The battery holder 10 may be of any embodiment as described above.

Fig. 13A shows the battery holder 10 holding a battery 32 of a correct battery type configured for use with the battery holder 10. In particular, Fig. 13A shows the same situation as Fig. 12A. It can be seen that the metal pin 36 of the battery 32 has a length l larger than a gap G located between the first contact 14 and a side surface of the wall portion 20 of the isolating element 18 facing the second contact 16. As a result of its length l, the metal pin 36 is able to reach and contact the first contact 14. Therefore, the battery 32 can be electrically contacted by the battery holder 10.

Fig. 13B shows the battery holder 10 holding a battery 32' of an incorrect battery type not suitable for use with the battery holder 10. It can be seen that, although the metal pin 36' of the battery 32' can be received by the isolating element 18, a length l' of the metal pin 36' is not enough to cross the gap G. As a result, the metal pin 36' is not able to reach and contact the first contact 14. Therefore, the battery 32' cannot be electrically contacted by the battery holder 10. In this way, the isolating element 18 can provide a physical key based on its position relative to the first contact 14 in a direction parallel to the longitudinal axis 82 of the battery chamber 12.

Fig. 13C shows the battery holder 10 holding a battery of an incorrect battery type, in this case a conventional battery 90 according to the state of the art. The conventional battery 90 comprises an electric terminal 92 having a relatively large diameter and a relatively short length l" in the direction parallel to the longitudinal axis of the battery housing. It can be seen that, as a result, the terminal 92 of the conventional battery 90 cannot be received by the isolating element 18. The width w of the open receiving slot 22 of the isolating element 18 is smaller than the diameter of the terminal 92 of the conventional battery 90. However, even in the case that the terminal 92 of the conventional battery 90 could be received by the isolating element 18, the length l" of the terminal 92 is not enough to cross the gap G. As a result, the terminal 92 is not able to reach and contact the first contact 14. Therefore, the conventional battery 90 cannot be electrically contacted by the battery holder 10 for the same reason as described above with reference to Fig. 13B.

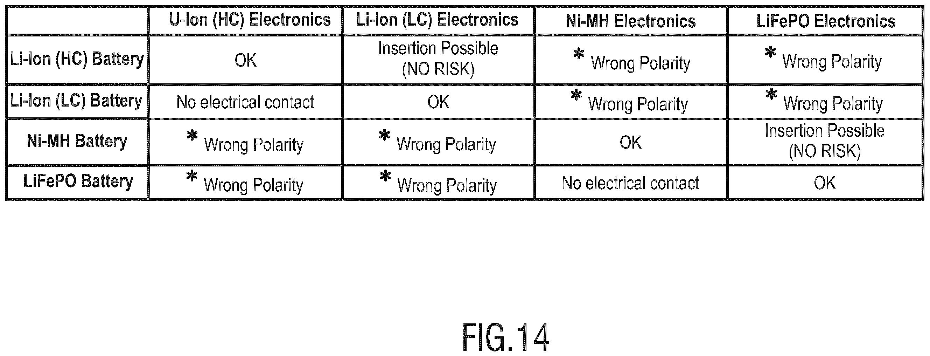

Fig. 14 shows a table illustrating an example of an implementation of a set of different batteries, comprising batteries with different chemistries and/or different capacities, and the corresponding powered electronics suitable for use with the different batteries. For this example, different safety risks resulting from different combinations of the batteries and the powered electronics in the table were estimated, taking into account the different characteristics and/or chemistries of the different batteries and the characteristics of the electrical circuitries. To provide a greater level of safety, batteries that could pose a critical safety risk to a particular electrical circuitry are to be prevented from being correctly inserted into the battery chamber 12 of the battery holder 10 used in conjunction with the particular electrical circuitry by means of the physical key of the battery holder 10, as described above. Batteries that may only cause a performance risk with respect to a particular electrical circuitry may also be prevented from being correctly inserted into the battery chamber 12 of the battery holder 10 used in conjunction with the particular electrical circuitry by means of the physical key of the battery holder 10. However, batteries that only cause a performance risk may alternatively be provided with an inverted (wrong) polarity to be dismissed by an additional electrical key provided in the particular circuitry, as described before with reference to Fig. 12A and 12B. For the example of Fig. 14, the embodiments of the battery holders 10 according to Fig. 9A to 10B are used and the embodiment of the set of batteries 30 according to Fig. 8 can be used.

In Fig. 14, the set of batteries 30 comprises a first battery 32 being a Li-ion (HC - high capacity) battery. The first battery 32 is configured for use with a first battery holder 10 used in conjunction with a Li-ion (HC - high capacity) electronics. Since there is no risk, respectively only a performance risk, when inserting a Li-ion (HC - high capacity) battery into a Li-ion (LC - low capacity) electronics, there is no need to prevent insertion of the first battery 32, by means of the physical key of the battery holder, into a second battery holder used in conjunction with the Li-ion LC electronics. However, the reliable electric connection may be prevented by the physical key (cf. Fig. 11B or 13B). Therefore, the first battery 32 may be of the first battery type of the set of batteries 30 in Fig. 8 having the diameter d1 of the metal pin 36. The first battery holder 10 may be the battery holder 10 in Fig. 9A.

The set of batteries 30 further comprises a second battery 32 being a Li-ion (LC - low capacity) battery. The second battery 32 is configured for use with the second battery holder 10 used in conjunction with a Li-ion (LC - low capacity) electronics. Since there is at least a performance risk, and in the worst case a critical safety risk, when using a Li-ion (LC - low capacity) battery in conjunction with a Li-ion (HC - high capacity) electronics, the insertion of the second battery into the first battery holder is to be prevented by means of the physical key of the first battery holder. Therefore, the second battery 32 may be of the second battery type of the set of batteries 30 in Fig. 8 having the diameter d2 of the metal pin 36. The second battery holder 10 may be the battery holder 10 in Fig. 9B. Since the diameter d2 exceeds the threshold diameter defined by the first battery holder, the second battery cannot be inserted into the first battery holder 10.

The set of batteries 30 further comprises a third battery and a fourth battery 32 being of a chemistry which is incompatible with the Li-ion HC and LC electronics, which can pose a critical safety risk if the third battery or the fourth battery 32 is connected to the first or the second battery holder 10. The third battery 32 may be a Ni-MH battery and the fourth battery 32 may be a LiFePO battery, as indicated in Fig. 14. To prevent any electrical connection between the third battery or the fourth battery and any one of the Li-ion HC and LC electronics used in conjunction with the first or the second battery holder 10, the third battery and the fourth battery 32 each have its negative polarity at the first terminal 34 (i.e., at the metal pin 36). Therefore, the third battery 32 may be of the third battery type of the set of batteries 30 in Fig. 8 having the diameter d3 of the metal pin 36, and a third battery holder 10 for use with the third battery may be the battery holder 10 shown in Fig. 10A. The fourth battery 32 may be of the fourth battery type of the set of batteries 30 in Fig. 8 having the diameter d4 of the metal pin 36, and a fourth battery holder 10 for use with the fourth battery may be the battery holder 10 shown in Fig. 10B. Since the diameter d4 exceeds the threshold diameter defined by the third battery holder 10, the fourth battery cannot be inserted into the third battery holder 10. As there may be a higher safety risk when using a LiFePO battery in conjunction with a NiMH electronics, a critical safety risk can be avoided. It goes without saying that the first and second batteries 32 also have the wrong polarity for the third and fourth battery holders 10.

In summary, the present invention prevents a user from placing incorrect types of batteries into a battery holder and also prevents the user from placing the correct battery with its polarities in incorrect positions into a battery holder.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A battery holder (10) configured for holding and electrically contacting a battery (32), wherein the battery comprises a battery housing (44) having a longitudinal axis (31), a first electric terminal (34) provided at a first axial end surface (46) of the battery housing and comprising a metal pin (36) protruding from the first axial end surface and having a circumferential contact surface (42) extending parallel to the longitudinal axis of the battery housing (44), and a second electric terminal (38) provided at a second axial end surface (48) of the battery housing (44) and comprising a metal contact surface (40) extending transversely to the longitudinal axis of the battery housing (44), wherein the battery holder (10) comprises:
- a battery chamber (12) configured to receive the battery (32) and having a longitudinal axis (82);
- a first electric contact (14) arranged at a first end portion of the battery chamber (12) and configured to electrically contact the first electric terminal (34) of the battery (32), wherein the first electric contact (14) is configured as a scrape contact to electrically contact the circumferential contact surface (42) of the metal pin (36) of the first electric terminal (34) of the battery (32) at two mutually opposite positions on said circumferential contact surface; and
- a second electric contact (16) arranged at a second end portion of the battery chamber (12) opposite the first end portion and configured to electrically contact the second electric terminal (38) of the battery (32), wherein the second electric contact (16) is configured as a spring contact to electrically contact the metal contact surface (40) of the second electric terminal (38) of the battery (32) by spring force of the spring contact acting in an axial direction parallel to the longitudinal axis (82) of the battery chamber (12).

2. The battery holder (10) as claimed in claim 1, wherein the first electric contact (14) comprises two metal contact plates (15) each having two main surfaces (53) extending transversely to the longitudinal axis (82) of the battery chamber (12) and a contact side surface (54) connecting the two main surfaces (53), wherein the contact side surface (54) of each of the two metal contact plates (15) is arranged to electrically contact the circumferential contact surface (42) of the metal pin (36) of the first electric terminal (34) of the battery (32) at a respective one of the two mutually opposite positions on said circumferential contact surface.

3. The battery holder (10) as claimed in claim 2, wherein the two metal contact plates (15) are integrally formed on a metal base plate of the first electric contact (14), wherein the first electric contact (14) has a receiving slot (50) arranged between the two metal contact plates (15) and extending in a direction transverse to the longitudinal axis (82) of the battery chamber (12) from the metal base plate to an open end (52) of the receiving slot (50), and wherein the receiving slot (50) is configured and arranged to receive the metal pin (36) of the first electric terminal (34) of the battery (32) via said open end (52) in a receiving direction transverse to the longitudinal axis (82) of the battery chamber (12).

4. The battery holder (10) as claimed in claim 3, wherein the receiving slot (50) has a first end portion which diverges in a direction towards the open end (52) of the receiving slot.

5. The battery holder (10) as claimed in claim 3 or 4, wherein the receiving slot (50) merges into a circular opening (58) provided in the metal base plate of the first electric contact (14) at a second end portion of the receiving slot (50) opposite to the first end portion.

6. The battery holder (10) as claimed in any of the claims 2 to 5, wherein the two metal contact plates (15) of the first electric contact (14) each comprise a bent flange portion (51) arranged at a side of the metal contact plate (15) opposite to the contact side surface (54) of the metal contact plate (15).

7. The battery holder (10) as claimed in any of the claims 1 to 6,
wherein the battery holder (10) further comprises an isolating element (18) arranged at the first end portion of the battery chamber (12) at a side of the first electric contact (14) which faces the second electric contact (16), wherein the isolating element (18) is made from an electrically non-conducting material and comprises an open receiving slot (22) configured to receive the metal pin (36) of the first electric terminal (34) of the battery (32) in a receiving direction transverse to the longitudinal axis of the battery chamber (12) to allow the first electric contact (14) to electrically contact the circumferential contact surface (42) of the metal pin (36) at the two mutually opposite positions on said circumferential contact surface.

8. The battery holder (10) as claimed in claim 7, wherein the isolating element (18) comprises a wall portion (20) extending perpendicularly to the longitudinal axis (82) of the battery chamber (12) and being provided with the open receiving slot (22) of the isolating element (18).

9. The battery holder (10) as claimed in claim 7 or 8, wherein the isolating element (18) extends beyond the first electric contact (14) in a direction opposite to the receiving direction of the open receiving slot (22) of the isolating element (18).

10. The battery holder (10) as claimed in any one of the claims 7 to 9, wherein the open receiving slot (22) of the isolating element (18) extends in the receiving direction, in particular at least sectionally tapers, and comprises an opening configured to receive the metal pin (36) of the first electric terminal (34) of the battery (32) in the receiving direction.

11. The battery holder (10) as claimed in any one of the claims 7 to 10, wherein the open receiving slot (22) of the isolating element (18) has a width (w) and/or is configured to disable the open receiving slot (22) of the isolating element (18) to receive a pin having a diameter larger than a predetermined threshold diameter.

12. The battery holder (10) as claimed in any one of the preceding claims, wherein the second electric contact (16) of the battery holder (10) comprises at least two metal tongues (66), which are each flexible in the axial direction towards the first electric contact (14) and are each configured to electrically contact the metal contact surface (40) of the second electric terminal (38) of the battery (32) in an elastically deformed condition to provide the spring force in the axial direction on the metal contact surface.

13. The battery holder (10) as claimed in claim 12, wherein the metal tongues (66) of the second electric contact (16) of the battery holder (10) are each bent relative to a base portion (65) of the second electric contact (16) and each taper towards an end portion (67) which is arranged to electrically contact the metal contact surface (40) of the second electric terminal (38) of the battery (32).

14. The battery holder (10) as claimed in claim 12 or 13, wherein the at least two metal tongues (66) of the second electric contact (16) of the battery holder (10) are each at least partially coated with a nickel alloy.

15. A battery system (80) comprising:
- a battery holder (10) as claimed in any one of the preceding claims; and
- a battery (32) comprising a battery housing (44) having a longitudinal axis (31), a first electric terminal (34) provided at a first axial end surface (46) of the battery housing and comprising a metal pin (36) protruding from the first axial end surface and having a circumferential contact surface (42) extending parallel to the longitudinal axis of the battery housing (44), and a second electric terminal (38) provided at a second axial end surface (48) of the battery housing (44) and comprising a metal contact surface (40) extending transversely to the longitudinal axis of the battery housing (44).
